## Europäisches Patentamt

## European Patent Office

## Office européen des brevets

(19)

(11) Veröffentlichungsnummer: **0 239 796**
**B1**

(12)
# EUROPÄISCHE PATENTSCHRIFT

(45) Veröffentlichungstag der Patentschrift:
**10.10.90**

(21) Anmeldenummer: **87102780.1**

(22) Anmeldetag: **26.02.87**

(51) Int. Cl.⁵: **C09D 7/12**, C09D 5/38,
C08L 71/02

(54) **Verfahren zur Erhöhung des Anteils der unter Verarbeitungsbedingungen nichtflüchtigen Bestandteile in vorwiegend organische Lösungsmittel enthaltenden Basisbeschichtungszusammensetzungen.**

(30) Priorität: **29.03.86 DE 3610765**

(43) Veröffentlichungstag der Anmeldung:
**07.10.87 Patentblatt 87/41**

(45) Bekanntmachung des Hinweises auf die Patenterteilung:
**10.10.90 Patentblatt 90/41**

(84) Benannte Vertragsstaaten:
**AT BE CH DE ES FR GB IT LI NL SE**

(56) Entgegenhaltungen:
**EP-A- 0 138 614**
**BE-A- 662 798**
**FR-A- 2 487 841**
**NL-A- 7 602 590**
**US-A- 4 150 007**

(73) Patentinhaber: **BASF Lacke + Farben
Aktiengesellschaft, Max-Winkelmann-Strasse 80,
D-4400 Münster(DE)**

(72) Erfinder: **Renz, Rudolf, Eichenstrasse 12,
D-8702 Rottendorf(DE)**
Erfinder: **Müller, Bodo, Dr., Mergentheimer Strasse 8,
D-8700 Würzburg(DE)**
Erfinder: **Vesper, Willy, Neustadtstrasse 17,
D-8714 Wiesentheid(DE)**

ACTORUM AG

**Beschreibung**

Die Erfindung betrifft ein Verfahren zur Erhöhung des Anteils der unter Verarbeitungsbedingungen nichtflüchtigen Bestandteile in vorwiegend organische Verdünnungs- bzw. Lösungsmittel enthaltenden Basisbeschichtungszusammensetzungen zur Herstellung von Mehrschichtüberzügen, vorzugsweise Metalleffektlackierungen.

Insbesondere auf dem Gebiet der Automobillackierung, aber auch in anderen Bereichen, besteht ein großes Interesse an Basisbeschichtungszusammensetzungen zur Herstellung von Mehrschichtüberzügen.

In der Automobillackierung haben sich vor allem Mehrschichtlackierungen des "Basecoat-Clearcoat"-Typs inssondere für Metalleffektlackierungen weitgehend durchgesetzt.

"Basecoat - Clearcoat" -Lackierungen werden hergestellt, indem nach Vorlackierung eines pigmentierten Basislackes und kurzer Ablüftzeit ohne Einbrennschritt (Naß-in-Naß-Verfahren) ein Klarlack überlackiert wird und anschließend Basislack und Klarlack zusammen eingebrannt werden.

Die Überzugsmittel zur Herstellung dieser Basisschichten müssen nach dem heute üblichen rationellen "Naß-in-Naß"-Verfahren verarbeitbar sein, d.h. sie müssen nach einer möglichst kurzen Vortrockenzeit ohne Einbrennschritt mit einer (transparenten) Deckschicht überlackiert werden können, ohne störende Anlöseerscheinungen und "Strike-in"-Phänomene zu zeigen.

Bei der Entwicklung von Überzugsmitteln für Basisschichten von Metalleffektlacken müssen außerdem noch weitere Probleme gelöst werden. Der Metalleffekt hängt entscheidend von der Orientierung der Metallpigmentteilchen im Lackfilm ab. Ein im "Naß-in-Naß"-Verfahren verarbeitbarer Metalleffekt-Basislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

Es sind eine ganze Reihe von vorwiegend organische Verdünnung- bzw. Lösungsmittel enthaltenden Basisbeschichtungszusammensetzungen zur Herstellung von Mehrschichtüberzügen, insbesondere Metalleffektlackierungen bekannt, mit denen Mehrschichtüberzüge mit ausgezeichneten Eigenschaften hergestellt werden können.

Diese zum Stand der Technik gehörenden Basisbeschichtungszusammensetzungen haben aber den Nachteil, daß sie einen verhältnismäßig niedrigen Anteil an unter den Verarbeitungsbedingungen nichtflüchtigen Bestandteile enthalten.

Es ist ein erklärtes Ziel der Lackhersteller, den Anteil der unter Verarbeitungsbedingungen flüchtigen Bestandteile in vorwiegend organische Verdünnungs- bzw. Lösungsmittel enthaltenden Basisbeschichtungszusammen setzungen zur Herstellung von Mehrschichtüberzügen, vorzugsweise Metalleffektlackierungen zu reduzieren.

Es hat nicht an Versuchen gefehlt, den Anteil an nichtflüchtigen Bestandteilen auf Kosten der flüchtigen Bestandteile zu erhöhen.

So hat man zum Beispiel versucht, das mittlere Molekulargewicht der in den Basisbeschichtungszusammensetzungen enthaltenen Bindemittel herabzusetzen und/oder den Basisbeschichtungszusammensetzungen Mikrogele und/oder feste Füllstoffe zuzusetzen.

Alle diese Maßnahmen sind jedoch mit Nachteilen verbunden.

Wird zum Beispiel in den bewährten, optimal ausbalancierten, Metallpigmente enthaltenden Basisbeschichtungszusammensetzungen das mittlere Molekulargewicht der Bindemittelkomponente herabgesetzt, so kann zwar auf einen Teil der unter Verarbeitungsbedingungen flüchtigen organischen Verdünnungs- bzw. Lösungsmittel verzichtet werden, dafür müssen aber ein schlechterer Metalleffekt, Wiederanlöseprobleme, Verschlechterung in der Farbtonhaltung und Einbußen bei der Applikationssicherheit in Kauf genommen werden.

Beim Zusatz von Mikrogelen werden in der Regel die rheologischen Eigenschaften der Lacksysteme beeinflußt; außerdem können Unverträglichkeiten auftreten.

Mikrogele können nicht ohne weiteres zu bewährten, optimal ausbalancierten Basisbeschichtungszusammensetzungen, insbesondere zu Metallpigmente enthaltenden Basisbeschichtungszusammensetzungen, zugegeben werden. Sie erfordern eine aufwendige Anpassung des gesamten Lacksystems auf die Menge und Art der zuzusetzenden Mikrogele.

Der Zusatz fester Füllstoffe zu Basisbeschichtungszusammensetzungen, insbesondere zu Metallpigmente enthaltenden Basisbeschichtungszusammensetzungen, wirkt sich negativ auf das Erscheinungsbild (Appearance) der erhaltenen Lackierungen aus und erlaubt in der Regel keine Reduzierung der in den Beschichtungszusammensetzungen enthaltenen absoluten Menge an unter Verarbeitungsbedingungen flüchtigen Bestandteile.

Der vorliegenden Erfindung liegt die Aufgabe zugrunde, ein Verfahren zur Erhöhung des Anteils der unter Verarbeitungsbedingungen nichtflüchtigen Bestandteile in vorwiegend organische Verdünnungsbzw. Lösungsmittel enthaltenden Basisbeschichtungszusammensetzungen zur Herstellung von Mehrschichtüberzügen, vorzugsweise Metalleffektlackierungen bereitzustellen.

Das Verfahren sollte auf möglichst viele bewährte, optimal ausbalancierte Basisbeschichtungszusammensetzungen, insbesondere Metallpigmente enthaltende Basisbeschichtungszusammensetzungen, ohne großen technischen Aufwand anwendbar sein und die Qualität der bewährten, optimal ausbalancierten Basisbeschichtungszusammensetzungen (z.B. Wiederanlösungsverhalten, Farbkonstanz, Applikationssicherheit und erreichbarer Metalleffekt) nicht negativ beeinflussen.

Diese Aufgaben können überraschenderweise dadurch gelöst werden, daß bis zu 10 Gew.-% der unter Verarbeitungsbedingungen flüchtigen Bestandteile durch einen aliphatischen Polyether bzw. durch Mischungen von aliphatischen Polyethern ersetzt werden, wobei die aliphatischen Polyether ein mittleres Molekulargewicht von mindestens 300 aufweisen, mindestens eine, bevorzugt mindestens zwei Hydroxylgruppen pro Molekül enthalten und unter Normalbedingungen flüssig sind.

Die Erfindung betrifft auch die Verwendung von unter Normalbedingungen flüssigen aliphatischen Polyethern bzw. Mischungen von aliphatischen Polyethern, vorzugsweise Polypropylenoxide, die ein mittleres Molekulargewicht von mindestens 300 und mindestens eine, bevorzugt mindestens zwei Hydroxylgruppen pro Molekül aufweisen zur Erhöhung des Anteils der unter Verarbeitungsbedingungen nicht flüchtigen Bestanteile in vorwiegend organische Verdünnungs- bzw. Lösungsmittel enthaltenden Basisbeschichtungszusammensetzungen zur Herstellung von Mehrschichtüberzügen, vorzugsweise Metalleffektlackierungen.

Das erfindungsgemäße Verfahren kann auf alle mikrogelhaltigen oder mikrogelfreien, vorwiegend organische Verdünnungs- bzw. Lösungsmittel enthaltende Basisbeschichtungszusammensetzungen zur Herstellung von Mehrschichtüberzügen angewendet werden und ist sowohl für metallpigmenthaltige als auch metallpigmentfreie Basisbeschichtungszusammensetzungen geeignet.

Das erfindungsgemäße Verfahren wird vorzugsweise auf vorwiegend organischer Verdünnungs- bzw. Lösungsmittel enthaltende Basisbeschichtungszusammensetzungen, die zur Herstellung von Metalleffektlackierungen des "Basecoat-Clearcoat"-Typs geeignet sind, angewendet. Solche Basisbeschichtungszusammensetzungen sind in der Literatur vielfach beschrieben. Als Beispiele seien die Patentveröffentlichungen US-PS-3,639,147, US-PS-4,576,868, US-PS-4,220,679 und US-PS-4,477,536 genannt. Besonders bevorzugt sind metallpigmenthaltige Lacke, die auf Basis von Celluloseacetobutyrat/Polyester, Celluloseacetobutyrat/Acrylatharz, Polyurethan/Polyester, Mikrogel/Acrylatharz oder Mikrogel/Polyurethan/Polyester-Bindemittelsystemen aufgebaut sind.

Bei den in Rede stehenden Basisbeschichtungszusammensetzungen handelt es sich um Beschichtungszusammensetzungen, die nicht-wäßrige organische Verdünnungsbzw. Lösungsmittel enthalten. Diese Basisbeschichtungszusammensetzungen werden mit einer bestimmten Lieferviskosität, die über der für die Applikation notwendigen Viskosität liegt, an den Lackverarbeiter geliefert. Dort wird das Lackmaterial verarbeitet, indem es

(1) durch Zugabe von organischen Lösungs- bzw. Verdünnungsmittel auf die für die Applikation notwendige Viskosität gebracht wird,

(2) mit Hilfe allgemein bekannter Applikationsmethoden (insbesondere durch pneumatische Applikation bzw. elektrostatische Hochrotationszerstäubung) auf das Substrat aufgebracht wird und

(3) nach einer im allgemeinen 30 bis 500 sec. dauernden Ablüftphase mit einem Klarlack überlackiert und schließlich

(4) im allgemeinen 20 Minuten bei etwa 120 bis etwa 140 °C eingebrannt wird.

Unter dem Ausdruck "unter Verarbeitungsbedingungen nichtflüchtige Bestandteile" werden hier Lackbestandteile verstanden, die unter den bei der Durchführung der Verarbeitungsstufen (1) bis (4) herrschenden Bedingungen nicht mehr als 5 % ihres Gewichtes durch Verflüchtigung, d.h. durch Verdampfen verlieren.

Unter aliphatischen Polyethern werden Substanzen verstanden, die mehrere Struktureinheiten der allgemeinen Formel $-(R-O)-$ enthalten, wobei R für einen Alkylenrest mit 2 bis 6 Kohlenstoffatomen steht.

Die erfindungsgemäß einsetzbaren aliphatischen Polyether müssen ein mittleres Molekulargewicht von mindestens 300 aufweisen. Außerdem müssen sie mindestens eine, bevorzugt mindestens zwei Hydroxylgruppen pro Molekül enthalten und unter Normalbedingungen (20 °C, 760 Torr) flüssig sein.

Unter Berücksichtigung dieser Limitierungen kann im wesentlichen jeder in den organischen Lösungs- bzw. Verdünnungsmitteln lösliche oder dispergierbare aliphatische Polyether zur Erhöhung des Anteils der unter Verarbeitungsbedingungen nichtflüchtigen Bestandteile verwendet werden. Als Beispiele seien Polyalkylenoxidpolyole, wie z.B. Polyethylenoxidpolyole, Polypropylenoxidpolyole sowie Ethoxylierungs- und/oder Propoxylierungsprodukte geeigneter 2- bis 6-wertiger Startermoleküle, wie z.B. Glyzerin, Trimethylolpropan, Hexantriol, Pentaerythrit, Sorbit, Saccharose, Ammoniak, Ethylendiamin, Anilin usw., genannt. Es können auch Mischungen von aliphatischen Polyethern verwendet werden. Bevorzugt werden Polypropylenoxidpolyole eingesetzt.

Die Zugabe der erfindungsgemäßen aliphatischen Polyether wird durch zwei Faktoren limitiert: zum einen wirken die erfindungsgemäßen aliphatischen Polyether in den aus den Basisbeschichtungszusammensetzungen hergestellten Überzügen als Weichmacher und zum anderen erhöhen die erfindungsgemäßen aliphatischen Polyether die Hydrophilie der aus den Basisbeschichtungszusammensetzungen hergestellten Überzüge. Das Ausmaß der beiden Effekte hängt sowohl von der Zusammensetzung der Basisbeschichtungszusammensetzung als auch von der Natur des verwendeten aliphatischen Polyethers ab. Der Durchschnittsfachmann kann mit Hilfe einfacher Mittel schnell feststellen, in welcher Menge ein bestimmter aliphatischer Polyether in ei ner Basisbeschichtungszusammensetzung inkorporiert werden kann, ohne daß die daraus hergestellten Überzüge zu weich oder zu hydrophil werden.

Überraschenderweise können in bewährten, optimal ausbalancierten vorzugsweise Metallpigmente enthaltenden Basisbeschichtungszusammensetzungen bis zu 10 Gew.-% der unter Verarbeitungsbedingungen flüchtigen Bestandteile durch die erfindungsgemäßen aliphatischen Polyether ersetzt werden, ohne daß Wiederanlöseverhalten, Farbtonkonstanz, Applikationssicherheit oder metallischer Effekt der aus den Basisbeschichtungszusammensetzungen hergestellten Beschichtungen negativ beeinflußt werden.

Die erfindungsgemäßen aliphatischen Polyether wirken wahrscheinlich als reaktive Verdünnungs- bzw. Lösungsmittel. Sie beeinflussen die guten Eigenschaften von optimal ausbalancierten Basisbeschichtungszusammensetzungen nicht negativ, sind unter Verarbeitungsbedingungen nicht flüchtig und reagieren wahrscheinlich während des Einbrennprozesses über ihre Hydroxylgruppen mit geeigneten Bindemittelkomponenten, wie z.B. Melamin-Formaldehydharzen.

Weiter wurde überraschenderweise festgestellt, daß durch die erfindungsgemäße Zugabe der erfindungsgemäßen aliphatischen Polyether auch noch die Spritznebelaufnahme verbessert und die elektrostatische Applikation erleichtert wird.

Mit dem erfindungsgemäßen Verfahren wird ein Verfahren bereitgestellt, das es erlaubt, den Anteil an unter Verarbeitungsbedingungen nicht flüchtigen Bestandteile in den in Rede stehenden Basisbeschichtungszusammensetzungen mit sehr einfachen Mitteln zu erhöhen bzw. auf einen bestimmten Wert einzustellen.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiele A 1

In einem Vierhalskolben mit Rührer, Thermometer und Rückflußkühler werden 741 g eines Polyesters aus Adipinsäure und Neopentylglykol mit einer OH-Zahl von 113 und 26,5 g Diethylenglykol eingewogen und auf 100°C erhitzt. Nun wird eine halbe Stunde Vakuum angelegt, um alle vorhandene Feuchtigkeit zu entfernen. Danach werden im Abstand von 5 Minuten 1850 g Butylacetat, 393 g 4,4′-Dicyclohexylmethandiisocyanat und 0,3 g Dibutylzinndilaurat zugegeben und die Temperatur wird 1,5 h auf 100°C gehalten. Jetzt wird der NCO-Gehalt bestimmt. Er beträgt 1,36 %.

In einem Verdünnungsgefäß wird eine Mischung aus 1840 g Butylacetat, 1230 g n-Butanol und 70 g Hexamethylendiamin vorgelegt. Das NCO-Gruppen enthaltende Vorprodukt wird unter Rühren innerhalb 15 - 20 Minuten zugegeben. Man erhält eine nahezu farblose viskose Lösung mit einem Feststoffgehalt von 20 %.

Beispiel A 2

Wie in Beispiel A 1 werden 1300 g eines Caprolactonpolyesters mit der OH -Zahl von 112 zusammen mit 73 g Neopentylglykol im Vakuum entwässert. Nach Zugabe von 1850 g Butylacetat werden zunächst 688 g 3-Isocyanatomethyl-3.5.5-trimethylcyclohexylisocyanat zugegeben. Nach ca. 5 Minuten erfolgt die Zugabe von 0,3 g Dibutylzinndilaurat. Nach einer Reaktionszeit von 2 h bei 100°C beträgt der NCO-Gehalt der Lösung 2,27 %.

In einem Verdünnungsgefäß wird eine Mischung aus 1490 g Butylacetat, 1671 g n-Butanol und 88 g 1,3-Di-aminopropan vorgelegt. Das NCO-Gruppen enthaltende Vorprodukt wird unter Rühren innerhalb 15 - 20 Minuten zugegeben. Man erhält eine fast farblose viskose Lösung mit einem Festkörper von 30 %.

Beispiel A 3

Wie in Beispiel A 1 werden 1500 g eines Polyesters aus Hetandiol-1.6, Neopentylglykol und Adipinsäure mit einer OH -Zahl von 75 im Vakuum entwässert. Nach Zugabe von 2200 g Butylacetat werden zunächst 393 g 4.4′-Dicyclohexylmethandiisocyanat zugegeben, nach ca. 5 Minuten erfolgt die Zugabe von 0,3 g Dibutylzinndilaurat. Nach einer Reaktionszeit von 2 h bei 100°C beträgt der NCO-Gehalt der Lösung 0,98 %.

In einem Verdünnungsgefäß wird eine Mischung aus 2280 g Butylacetat, 1490 g Butanol und 98 g 1-Amino-3-aminomethyl-cyclohexan vorgelegt. Das NCO-Gruppen enthaltende Vorprodukt wird unter Rühren innerhalb von 15 - 20 Minuten zugegeben. Man erhält eine schwach gebliche viskose Lösung mit einem Feststoffgehalt von 25 %.

Beispiel B 1

In einem 2 1-Vierhalskolben mit Rührer, elektrischer Widerstandsheizung, Thermometer, Füllkörperkolonne gefüllt mit Pall-Ringen, ausgestattet mit Kopfthermometer, Destillationsbrücke, Kondensatkühler und Vorlage werden eingewogen 111,3 Propandiol-1,3; 329,9 g 2,2-Dimethylpropandiol-1,3, 163,5 g 1,1,1-Trimethylolpropan, 216,7 g Phthalsäureanhydrid, 243,0 g Isophthalsäure, 245,0 g Adipinsäure, 30,0 g Xylol und 2 g Dibutylzinnoxid. Das Reaktionsgemisch wird unter Rühren schnell auf 160°C erhitzt. Von 160°C wird die Temperatur innerhalb 5 Stunden auf 220°C so gesteigert, daß die Kolonnen-Kopftemperatur 103°C nicht übersteigt. Es wird bei 220°C gehalten und weiterverestert, bis eine Säurezahl (nach DIN) von 15 erreicht ist. Dann wird auf 140°C abgekühlt und der Polyester in 800 g einer Mischung aus Xylol und Ethylglykolacetat im Verhältnis 1 : 1 angelöst unter weiterem Kühlen. Es resultiert eine 60 %ige Lösung eines Polyesters mit einem Molekulargewicht von 930 und einer OH-Zahl (DIN) von 160, bezogen auf den festen Polyester.

### Beispiel B 2

Unter Verwendung der im Beispiel B 1 beschriebenen Apparatur, werden eingewogen 60,4 g Ethandiol-1,2, 74,0 g Propandiol-1,2, 227,9 g 2,2-Dimethylpropandiol-1,3, 229,9 g Hexandiol-1,6, 485,1 g Isophthalsäure, 40,0 g eines Aromatengemisches mit dem Siedebereich 180 bis 205°C und 3,0 g Dibutylzinnoxid. Es wird wie im Beispiel 1 aufgeheizt und verestert bis zu einer Säurezahl von 20. Dann wird auf 160°C abgekühlt und 213,3 g Adipinsäure und 93,5 g Trimellithsäureanhydrid zugegeben und erneut auf 200°C aufgeheizt. Es wird bei 200°C gehalten und verestert bis zu einer Säurezahl von 25. Es wird wie im Beispiel 1 abgekühlt und gelöst. Es resultiert eine 60 %ige Lösung eines Polyesters mit einem Molekulargewicht von 960 und einer OH-Zahl von 115, bezogen auf den festen Polyester.

### Beispiel B 3

Unter Verwendung der im Beispiel B 1 beschriebenen Apparatur und Verfahrensweise werden eingewogen und bei max. 220°C verestert: 113,4 g Ethandiol-1,2, 142,6 g 2,2-Dimethylpropandiol-1,3, 279,8 g Hydroxipivalinsäureneopentylglykolester, 91,9 g 1,1,1-Trimethylolpropan, 303,5 g Isophthalsäure, 208,5 g Hexahydrophthalsäureanhydrid, 200,2 g Adipinsäure, 30 g Xylol, 2 g Dibutylzinnoxid.
Es wird bei 220°C verestert bis zu einer Säurezahl von 5. Es resultiert eine 60 %ige Lösung eines Polyesters mit einem Molekulargewicht von 1520 und einer OH-Zahl von 100, bezogen auf den festen Polyester.

### Beispiel B 4

Unter Verwendung der im Beispiel B 1 beschriebenen Apparatur und Verfahrensweise werden eingewogen und beimax. 220°C verestert: 102,2 g Propandiol-1,2, 102,2 g Propandiol-1,3, 372,8 g 2,2-Dimethylpropandiol-1,3, 60,0 g 1,1,1-Trimethylolpropan, 331,6 g Phthalsäureanhydrid, 172,0 g Trimellithsäureanhydrid, 196,3 g Adipinsäure, 40 g eines Aromatengemisches mit einem Siedebereich 180 - 205° C.
Es wird wie im Beispiel 1, unter besonderer Beachtung der Kopftemperatur, aufgeheizt und verestert bei 200°C bis zu einer Säurezahl von 10. Es wird wie im Beispiel 1 abgekühlt und angelöst. Es resultiert eine 60 %ige Lösung eines Polyesters mit einem Molekulargewicht von 780 und einer OH-Zahl von 198, bezogen auf den festen Polyester.

### Beispiel C Melaminharz

In einen 2 1-Vierhalskolben mit elektrischer Widerstandsheizung, Rührer, Thermometer und Destillationsapparatur für die Kreisfahrweise mit Wasserabscheider werden eingewogen: 560 g Isobutanol, 250 g 37 %-ige wässrige Formaldehydlösung, 30 g Toluol und 0,05 g 85 %ige Phosphorsäure. Das Reaktionsgemisch wird bis 40°C aufgeheizt und es werden 95,3 g Melamin zugegeben. Es wird auf 85°C aufgeheizt und die Temperatur langsam auf 100°C gesteigert, so daß das Reaktionsgemisch dabei zügig destilliert, es wird dabei Wasser ausgekreist. Es wird bei 100°C gehalten, bis eine Benzinverträglichkeit von 1/5 mit einem Benzin des Siedebereichs von 135 - 180°C erreicht wird. Dann wird der Rücklauf der Destillationsanlage geschlossen und 300 g Lösungsmittel abdestilliert; dabei steigt die Temperatur auf 115°C an. Dann wird auf 80°C abgekühlt und das Reaktionsgemisch mit 65 g Isobutanol verdünnt. Es resultiert die Lösung eines Melaminharzes mit einem Festkörper (60 Min. 100°C) von 55 % und einer Viskosität von 250 sec (DIN 53 211).

### Beispiel D Copolymerdispersion

In einem beheizbaren Mischer mit Schnellrührer werden eingewogen: 200 g Xylol und 100 g eines Ethylenvinylacetat-Copolymer mit einem Vinylacetatgehalt von 12 % und auf 100°C aufgeheizt und bis zur homogenen Lösung gerührt. Dann wird auf 80°C abgekühlt und die Lösung mit 700 g eines Gemisches aus Xylol und Butylacetat ausgefällt, die Temperatur sinkt dabei auf 50°C. Es resultiert eine 10 %ige Dispersion des Copolymers.

Beispiel E 1 Herstellung eines Microgelkonzentrates

In einem Polymerisationsgefäß mit Rührer, Rückflußkühler und zwei Zulaufgefäßen werden 2510 g vollentsalztes Wasser zusammen mit 34 g Natriumlaurylsulfatlösung (35 %ig) auf 80°C erhitzt.

In einem getrennten Rührregefäß wird unter Rühren eine Präemulsion hergestellt, bestehend aus: 1267 g vollentsalztem Wasser, 65 g Natriumlaurylsulfatlösung (35 %ig), 490 g Butandioldiacrylat, 478 g Methylmethacrylat und 140 g Hydroxipropylmethacrylat.

In einem Zulaufgefäß wird die Initiatorlösung vorgelegt, bestehend aus 14 g Ammoniumpersulfat und 660 g vollentsalztem Wasser. Die Präemulsion und die Initiatorlösung werden nun simultan zudosiert, so daß der Zulauf der Präemulsion 2 h, der Zulauf der Initiatorlösung 3 h dauert. Die Temperatur wird durch Kühlen auf 80°C gehalten. Nach Ende des Zulaufs wird die Temperatur noch 1 h bei 80°C gehalten.

Man erhält eine 20 %ige Dispersion von vernetzten Teilchen, die in keinem organischen Lösungsmittel löslich sind.

2000 g dieser wäßrigen Dispersion werden in einem Scheidetrichter, zusammen mit 620 g n-Butanol, 10 Minuten lang intensiv geschüttelt. Nach 30 minütiger Wartezeit erhält man 2 Phasen. Die untere wäßrige Phase wird verworfen.

Die microgelhaltige Butanolphase wird in einem mit einem Wasserabscheider und einem Rührer ausgerüsteten Destillierkolben überführt. Hierzu werden 333 g des in Beispiel B 2 beschriebenen Polyesters und 500 g Ethylglykolacetat gegeben. Es wird nun im Vakuum bei max. 60°C das restliche Wasser azeotrop abdestilliert. Man erhält ein Microgelkonzentrat mit einem Festkörpergehalt von 32 %.

Beispiel E 2

2000 g der im Beispiel E 1 beschriebenen wäßrigen Dispersion werden in einem Scheidetrichter zusammen mit 800 g Butylacetat 15 Minuten lang intensiv geschüttelt. Nach 1,5-stündiger Wartezeit erhält man 2 Phasen. Die wäßrige Phase wird verworfen. Die organische Phase wird in einem mit Wasserabscheider und einem Rührer ausgerüsteten Destillierkolben überführt. Hierzu werden 400 g eines Polyesters aus Adipinsäure und Neopentylglykol mit einer OH-Zahl von 123 gegeben. Es wird nun im Vakuum bei max. 60°C alles noch vorhandene Wasser restlos azeotrop abdestilliert. Man erhält ein Microgelkonzentrat mit einem Feststoffgehalt von 60 %. 1500 g dieses Konzentrates werden wie im Beispiel A 1 mit 280 g 4,4'-Dicyclohexylmethandiisocyanat und 0,3 g Dibutylzinndilaurat versetzt. Nach 2 stündiger Reaktionszeit beträgt der NCO-Gehalt 2,66 %.

In einem Verdünnungsgefäß wird eine Mischung aus 1090 g Butylacetat, 218 g n-Butanol und 95 g 1-Amino-3-aminomethylcyclohexan vorgelegt. Das NCO-Gruppen enthaltende microgelhaltige Vorprodukt wird unter Rühren innerhalb 15 - 20 Minuten zugegeben. Man erhält eine trübe bläulich schimmernde pastöse Masse mit einem Feststoffgehalt von 40 %.

Beispiele Basislacke 1 bis 10

Die in den Beispielen A 1 bis A 3 beschriebenen Polyurethan/Polyharnstoff-Elastomerlösungen werden mit den in den Beispielen B 1 bis B 4 beschriebenen Polyesterlösungen, dem im Beispiel C beschriebenen Melamin-Formaldehydharz und gegebenenfalls mit der im Beispiel D beschriebenen Copolymerdispersion und/oder den in den Beispielen E 1 und E 2 beschriebenen Microgeldispersion so in einem Rührgefäß unter Rühren gemischt, daß eine homogene Mischung entsteht, deren Zusammensetzung, bezogen auf 100 Gew.-Teile der Festsubstanz, den Angaben in der Tabelle 1 entspricht. Dann wird die in dieser Tabelle angegebene Menge einer "non-Leafing"-Aluminiumbronze angepastet, 65 %ig in aliphatischen Kohlenwasserstoffen mit der 1,5-fachen Menge, bezogen auf die feste Aluiminiumbronze an Butylacetat, sorgfältig angeteigt und unter Rühren zu den entsprechenden vorher beschriebenen Mischungen aus Polyurethan/Polyharnstoff-Elastomerlösung, Polyester, Melamin-Formaldehydharz-Lösungen und gegebenenfalls Copolymerdispersion bzw. Microgel gegeben und verteilt. Die so entstandenen Mischungen werden mit einem Gemisch aus 50 Gew.-Teilen Butylacetat, 25 Gew.-Teilen Butylglykolacetat und 25 Gew.-Teilen Butanol auf einen Festkörper von 25 Gew.-% eingestellt.

Zu den so eingestellten Basislacken werden anschließend 6 bis 7 Gewichts-Teile (bezogen auf das Gesamtlacksystem) eines unter Normalbedingungen flüssigen, ein mittleres Molekulargewicht von etwa 900 aufweisendes Polypropylenoxiddiol zugegeben.

## Tabelle 1 = Basislacke (Gew.-Teile Festkörpergehalt der Lösungen, bezogen auf Gesamt-Festkörpergehalt = 100)

|  | 1 | 2 | 3 | 4 | 5 | 6 | 7 | 8 | 9 | 10 |
|---|---|---|---|---|---|---|---|---|---|---|
| A 1 | 30 | – | – | – | – | 21 | – | – | 48 | 25 |
| A 2 | – | 60 | – | 60 | – | – | 40 | – | – | – |
| A 3 | – | – | 45 | – | 40 | – | – | 35 | – | – |
| B 1 | 40 | – | – | – | – | 50 | 21 | – | – | – |
| B 2 | – | 10 | – | 5 | – | – | – | – | – | – |
| B 3 | – | – | 25 | – | 21 | – | – | – | – | 45 |
| B 4 | – | – | – | – | – | – | – | 37 | 38 | – |
| C | 12 | 12 | 12 | 12 | 12 | 17 | 12 | 16 | 15 | 18 |
| D | 6 | 6 | 6 | – | – | – | – | – | – | – |
| E 1 | – | – | – | 10 | – | – | 15 | – | – | – |
| E 2 | – | – | – | – | 15 | – | – | – | – | – |
| Aluminium | 12 | 12 | 12 | 12 | 12 | 12 | 12 | 12 | 12 | 12 |

EP 0 239 796 B1

## Beispiel K 1, Klarlack-Acrylat

In ein 3 1-Reaktionsgefäß mit Thermometer, Rührer, elektrischer Widerstandsheizung, Rückflußkühler und Zulaufgefäß werden 941 g eines Aromatengemisches mit einem Siedebereich von 156 - 170°C eingewogen und unter Rühren auf 140°C erhitzt. Es wird ein Gemisch aus 223 g Styrol, 223 g Methylmethacrylat, 208 g Butandiol-1, 4-monoacrylat, 30 g Acrylsäure, 803 g n-Butylacrylat und 18 g Di-tert-Butylperoxid innerhalb von 3 Stunden gleichmäßig aus dem Zulaufgefäß in das Reaktionsgefäß dosiert und die Temperatur bei 140°C gehalten.

Das Reaktionsgemisch wird weitere 30 Minuten bei 140°C gehalten und dann wird eine Lösung von 4 g Di-tert.-Butylperoxid in 50 g der Aromatenmischung mit dem Siedebereich zwischen 156 und 172°C zugegeben.

Nach weiteren 2 Stunden bei 140°C resultiert eine Acrylatharzlösung mit einen Festkörpergehalt von 60 %. Das Acrylatharz hat eine Säurezahl von 14, eine OH-Zahl von 109 und eine Viskosität von 250 mPa.s (gemessen als 50 %ige Lösung in Xylol mit dem ICI-Viskosimeter).

## Beispiel K 2, Klarlack

Zu 550 g der im Beispiel K 1 beschriebenen 60 %igen Acrylatharzlösung werden 300 g der im Beispiel C beschriebenen Lösung des Melamin-Formaldehyd-Harzes, 150 g Xylol und 50 g Butylglykolacetat unter Rühren zugegeben und sorgfältig gemischt. Es resultiert ein Klarlack mit einem Festgehalt von 46,5 %.

## Herstellung der Überzüge

Zur Herstellung der Überzüge werden Abschnitte von in der Automobilserien-Lackierung eingesetzten Karosserieblechen, die mit einer Eisenphosphatierung passiviert sind, eine Beschichtung durch eine kathodische Elektrotauchlackierung und einen Einbrennfüller erhalten haben, mit den in den Beispielen 1 bis 10 beschriebenen Basislacken und dem im Beispiel K 2 beschriebenen Klarlack beschichtet.

Zu diesem Zweck werden die in den Beispielen 1 bis 10 beschriebenen Basislacke mit einem Lösungsmittelgemisch aus Xylol und Butylacetat (70 : 30) auf eine Viskosität von 16 sec nach DIN 53 211 und der im Beispiel K 2 beschriebene Klarlack mit diesem Lösungsmittelgemisch auf eine Viskosität von 28 sec nach DIN 53 211 eingestellt.

Die eingestellten Basislacke werden mit einer Fließbecher-Spritzpistole mit einer Düsenweite von 1,2 mm und einem Spritzluftdruck von 4 bar so auf die beschriebenen, vorbehandelten Karosserieblechabschnitte gespritzt, daß eine Trockenfilmdicke der Basislacke von 12 bis 17 µm resultiert. Der aufgespritzte Basislack wird nach 5 Minuten mit dem eingestellten Klarlack, unter Verwendung der genannten Spritzbedingungen, so gespritzt, daß eine Trockenfilmdicke des Klarlacks von 35 bis 40 µm resultiert. Nach einer Ablüftzeit von 15 Minuten bei Raumtemperatur werden die Blechabschnitte in einem Umluftofen 30 Minuten bei 130°C eingebrannt.

Die so hergestellten Überzüge zeigen einen von einem Fachmann beurteilbaren hervorragenden metallischen Effekt entsprechen den Forderungen der in den technischen Lieferbedingungen der Automobilserienlackierung aufgeführten Prüfungen und sind von unter gleichen Bedingungen aus polyetherfreien Systemen hergestellten Überzügen nicht zu unterscheiden.

Bei polyetherfreien Systemen wird zur Einstellung der Spritzviskosität eine größere Menge an verdünnendem Lösungsmittelgemisch benötigt als bei den erfingungsgemäßen polyetherhaltigen Systemen.

## Patentansprüche

1. Verfahren zur Erhöhung des Anteils der unter Verarbeitungsbedinungen nichtflüchtigen Bestandteile in vorwiegend organische Verdünnungs- bzw. Lösungsmittel enthaltenden Basisbeschichtungszusammensetzung der Herstellung von Mehrschichtüberzügen, vorzugsweise Metalleffektlackierungen, dadurch gekennzeichnet, daß bis zu 10 Gew.-% der unter Verarbeitungsbedinungen flüchtigen Bestandteile durch eine aliphatischen Polyether bzw. durch Mischungen von aliphatischen Polyethern ersetzt werden, wobei unter aliphatischen Polyethern Substanzen verstanden werden, die mehrere Struktureinheiten der allgemeinen Formel $-(-R-O-)-$ enthalten, wobei R für einen Alkylenrest mit 2 bis 6 Kohlenstoffatomen steht und wobei die aliphatischen Polyether ein mittleres Molekulargewicht von mindestens 300 aufweisen, mindestens eine, bevorzugt mindestens zwei Hydroxylguppen pro Molekül enthalten und unter Normalbedingungen flüssig sind.

2. Verfahren nach Anspruch 1, dadurch gekennzeichnet, daß bis zu 10 Gew.-% der unter Verarbeitungsbedingungen flüchtigen Bestandteile durch ein Polypropylenoxidpolyol bzw. durch Mischungen von Polypropylenoxidpolyolen mit mittleren Molekulargewichten von 300 bis 900 ersetzt werden.

3. Verwendung von unter Normalbedingungen flüssigen aliphatischen Polyethern bzw. Mischungen von aliphatischen Polyethern, vorzugsweise Polypropylenoxiden, zur Erhöhung des Anteils der unter Verarbeitungsbedingungen nicht flüchtigen Bestandteile in vorwiegend organische Verdünnungs- bzw. Lösungsmittel enthaltenden Basisbeschichtungszusammensetzungen zur Herstellung von Mehrschichtüberzügen, vorzugsweise Metalleffektlackierungen, wobei unter aliphatischen Polyethern Substanzen

verstanden werden, die mehrere Struktureinheiten der allgemeinen Formel –(–R–O–)– enthalten, wobei R für einen Alkylenrest mit 2 bis 6 Kohlenstoffatomen steht und wobei die aliphatischen Polyether ein mittleres Molekulargewicht von mindestens 300 aufweisen und mindestens eine, bevorzugt mindestens zwei Hydroxylgruppen pro Molekül enthalten.

## Claims

1. Process for increasing the proportion of components which are non-volatile under processing conditions, in basecoat compositions containing predominantly organic diluents or solvents, for the production of multicoat finishes, preferably metallic finishes, characterized in that up to 10% by weight of the components which are volatile under processing conditions, are replaced by an aliphatic polyether or by mixtures of aliphatic polyethers, aliphatic polyethers being understood to mean substances which contain several structural units of the general formula –(R–O)–, in which R represents an alkylene radical of 2 to 6 carbon atoms, and the aliphatic polyethers having a mean molecular weight of not less than 300, containing at least one, preferably at least two, hydroxyl groups per molecule and being liquid under normal conditions.

2. Process according to Claim 1, characterized in that up to 10% by weight of the components which are volatile under processing conditions are replaced by a polypropylene oxide polyol or by mixtures of polypropylene oxide polyols having a mean molecular weight of 300 to 900.

3. Use of aliphatic polyethers or mixtures of aliphatic polyethers, preferably polypropylene oxides, which are liquid under normal conditions, for increasing the proportion of components which are non-volatile under processing conditions, in basecoat compositions containing predominantly organic diluents or solvents, for the production of multicoat finishes, preferably metallic finishes, aliphatic polyethers being understood to mean substances which contain several structural units of the general formula –(R–O)–, in which R represents an alkylene radical with 2 to 6 carbon atoms, and the aliphatic polyethers having a mean molecular weight of not less than 300 and containing at least one, preferably at least two, hydroxyl groups per molecule.

## Revendications

1. Procédé pour augmenter la fraction des constituants non-volatils dans les conditions de traitement dans des compositions de revêtement de base renfermant des diluants ou solvants en majorité organiques, pour la fabrication de revêtements à plusieurs couches, de préférence, de laquages à effet métallique, caractérisé par le fait que l'on remplace jusqu'à 10% en poids des constituants volatils dans les conditions de traitement par un polyéther aliphatique ou par des mélanges de polyéthers aliphatiques, où l'on entend par polyéthers aliphatiques des substances qui contiennent plusieurs unités structurales de la formule générale –(R–O)– où R représente un reste alkylène ayant 2 à 6 atomes de carbone, et où les polyéthers aliphatiques présentent une masse moléculaire moyenne d'au moins 300, renferment au moins un, de préférence au moins deux, groupes hydroxyle par molécule, et sont liquides dans les conditions normales.

2. Procédé selon la revendication 1, caractérisé par le fait que l'on remplace jusqu'à 10% en poids des constituants volatils dans les conditions de traitement par un polyoxypropylène-polyol ou par des mélanges de polyoxypropylène-polyols ayant des masses moléculaires moyennes de 300 à 900.

3. Utilisation de polyéthers aliphatiques ou de mélanges de polyéthers aliphatiques, de préférence, de polyoxypropylènes, liquides dans les conditions normales, pour augmenter la fraction des constituants non-volatils dans les conditions de traitement dans des compositions de revêtement de base renfermant des diluants ou solvants en majorité organiques, pour la fabrication de revêtements à plusieurs couches, de préférence, de laquages à effet métallique, où l'on entend par polyéthers aliphatiques des substances qui renferment plusieurs unités structurales de la formule générale –(R–O)–, où R représente un reste alkylène ayant 2 à 6 atomes de carbone et où les polyéthers aliphatiques présentent une masse moléculaire moyenne d'au moins 300 et renferment au moins un, de préférence au moins deux, groupes hydroxyle par molécule.